Europäisches Patentamt

European Patent Office

Office européen des brevets

(11) Publication number: 0 180 571
A2

# EUROPEAN PATENT APPLICATION

(21) Application number: 85890214.1

(22) Date of filing: 06.09.85

(51) Int. Cl.⁴: **B29C 47/86** , B29C 47/92 , //B29L23:22

(30) Priority: 11.09.84 ZA 847119

(43) Date of publication of application:
07.05.86 Bulletin 86/19

(84) Designated Contracting States:
AT DE GB

(71) Applicant: Hartl, Erwin
No 4 Country Lodge 13th Av
2195 Fairland(ZA)

(72) Inventor: Hartl, Erwin
No 4 Country Lodge 13th Av
2195 Fairland(ZA)

(74) Representative: Müllner, Erwin et al
Patentanwälte Dr. Erwin Müllner, Dipl.-Ing. Armin
Häupl, Dipl.-Ing. Werner Katschinka Weihburggasse
9
A-1010 Wien(AT)

(54) Extrusion die arrangement and automatic centering extrusion method.

(57) This invention relates to extruder arrangements of the type used in extruding elements such as tube-shaped pipes of circular or profiled cross sectional configuration or other profile products from an extrudable melt such as, for example, polymeric material, e.g. unplasticised polyvinylchloride.

According to the invention an extruder arrangement comprising [a] an annular die having a bore which constitutes a forming surface, [b] a mandrel disposed in the die and presenting a forming surface facing the forming surface of the die and spaced therefrom such that an extrusion passage is defined between the two forming surfaces, and [c] a heating arrangement in heat conductive relationship with one of the forming surfacen is characterised in that it includes temperature differential means in heat conductive relationship with at least one of the forming surfaces, which temperature differential means is adapted in use to allow the temperature of selected circumferential zones of an extrusion piece disposed in the extrusion passage to be individually controlled.

EP 0 180 571 A2

## "EXTRUSION DIE ARRANGEMENT AND AUTOMATIC CENTERING EXTRUSION METHOD"

This invention relates to extruder arrangements of the type used in extruding elements such as tube-shaped pipes of circular or profiled cross sectional configuration or other profile products from an extrudable melt such as, for example, thermoplastic polymeric material, e.g. unplasticised polyvinylchloride.

An extruders or extruder heads of the type in question for use in extruding tube-shaped pipe lengths of a circular cross section conventionally comprises a die housing containing an annular die which is fitted with an annular heating element along the exterior thereof and further containing a mandrel having a cylindrical section located substantially concentrically in the annular die so as to define an annular passage between the interior surface of the annular die and the surface of the mandrel. The facing surfaces of the die and mandrel by which the extrusion passage is defined may be shaped to define other required cross-sectional configurations of the element to be extruded but a circular cross-sectional configuration is the most common configuration. In use the die is heated by means of the heating element and the thermoplastic material, also heated to be in a plastic state, is delivered under pressure through the annular passage to emerge from the head in the form of a continuous pipe-shaped extrusion of the circular or profiled configuration determined by the extrusion passage configuration, and the extrusion is then taken up by a take-off arrangement through a calibration device and cooling arrangement.

During the start-up procedure of an extruder of the type in question for use in extruding a pipe of circular cross sectional configuration the die housing has to be adjusted relative to the fixed mandrel to have the mandrel located as near concentric as possible to the annular die to define a uniform extrusion passage between the die and the mandrel. However, when in use, temperature differentials along the circumference of the die may exist or arise and this requires the die to be adjusted to a disposition eccentric relative to the mandrel to compensate for the resulting differentials in viscosity of the extruded material when passing through the extrusion passage so as to ensure a substantially uniform wall thickness in the pipe emerging from the extrusion passage. Variations in the composition of the extrusion melt and changes in ambient conditions in the factory are two of the many factors which are known to give rise to disuniformity of the wall thickness of the extruded article and such disuniformity requires readjustment of the die relative to the mandrel. Such adjustment, both during pre-run and during a production run, requires the heavy die housing to be physically moved relative to the mandrel by means of adjustment bolts provided on the die housing. This adjustment is often not as sensitive as one might wish to be and requires a great amount of skill and labour. Although certain types of disuniformities in the extrusion may be corrected by such adjustment, other types of disuniformities cannot be corrected in this manner. A disuniformity in which two diametrically opposed zones of the pipe wall are too thick while two diametrically opposed zones, at 90° to the first mentioned zones, are too thin, cannot be corrected by adjusting the die relative to the mandrel.

It is well known that vast quantities of raw material are being wasted during the pre-run and production run adjustment and although some of this material may be re-ground for re-use, the loss in terms of production time can never be recovered.

It should further be pointed out that during a production run the wall thickness of the extruded article must constantly be monitored to ensure that it remains between pre-selected maximum and minimum values. A wall thickness below a standard minimum would render a pipe or other profiled product unacceptable in terms of strength standards while a wall thickness above the selected maximum is unacceptable from a production cost point of view. At present the adjustment to ensure conformity to standards has to be effected in the same laborious manner outlined above, often also with resultant loss of raw material.

It is an object of the present invention to provide an extrusion arrangement which it is believed will have advantages over known arrangements.

According to the invention an extruder arrangement comprising [a] an annular die having a bore which constitutes a forming surface, [b] a mandrel disposed in the die and presenting a forming surface facing the forming surface of the die and spaced therefrom such that an extrusion passage is defined between the two forming surfaces, and [c] a heating arrangement in heat conductive relationship with one of the forming surfaces is characterised in that it includes temperature differential means in heat conductive relationship with at least one of the forming surfaces, which temperature differential means is adapted in use to allow the temperature of selected circumferential zones of an extrusion piece disposed in the extrusion passage to be individually controlled.

Thus the temperature differential means may be in heat conductive relationship with the forming surface of the mandrel.

Preferably, however, the temperature differential means is in heat conductive relationship with the forming surface of the die.

In one arrangement of the invention the temperature differential means may include an annular heating sleeve which is adapted in use to be received in heat conductive relationship about the annular die and which includes a plurality of heating segments at least some of which segments are adapted to be individually energised to be heated to different temperatures, thereby to allow a heat differential to be created between the die zones in heat contact with the individually controllable heating segments.

In a preferred form of this arrangement according to the invention, there is provided an annular heating sleeve comprising eight heating segments in side by side relationship collectively to define a continuous sleeve, each heating segment being adapted to be individually energised.

In another form of this arrangement according to the invention, the sleeve may be in the form of a heat conductive metallic member defining an annular contact surface and adapted to be clamped in heat transferring contact about the exterior surface of the die, the member being provided with a plurality of heating zones each including at least one receiving formation, the receiving formations being located about the contact surface and spaced from the contact surface and each containing a heating element arranged in use to impart heat to its associated heating zone of the member and thereby to heat the zone of the die in the vicinity of the heating zone upon being energised.

In another arrangement according to the invention, there is provided a die having a die wall defining the bore into which the mandrel is received in spaced relationship when in use, the die wall defining a plurality of heating zones each including at least one receiving formation, the receiving formations being spaced from and about the bore and each containing a heating element arranged in use to heat a die zone in its vicinity upon being energised.

The receiving formations containing the heating elements may be in the form of passages which extend parallel to the axis of the bore of the die.

The receiving formations are preferably spaced symmetrically about the bore of the die.

The heating elements are preferably in the form of heating cartridges received snugly in the receiving formations.

Preferably each heating zone includes a plurality of receiving formations.

The heating elements forming part of the temperature differential means may be the sole source of heat for heating the die.

Preferably, however, the temperature differential means may be used in conjunction with an additional die heating arrangement which is designed to heat the die to a uniform temperature along its entire circumference so that the temperature differential means would primarily serve a correcting function.

In an alternative arrangement according to the invention the temperature differential means may include a cooling system arranged to cool selected zones of the die.

In a first form of this alternative arrangement the temperature differential means may include an annular cooling sleeve which is adapted in use to be received in heat conductive relationship about the annular die and which includes a plurality of cooling segments at least some of which segments are adapted to be individually supplied with a coolant to be cooled, thereby to allow a heat differential to be created between the die zones in heat contact with the individually controllable cooling segments.

In a preferred embodiment of this form of the arrangement according to the invention, there is provided an annular cooling sleeve comprising eight cooling segments in side by side relationship collectively to define a continuous sleeve, each segment including a conduit and the arrangement being such that each conduit is adapted to be individually supplied with a coolant passing therethrough.

In another form of this arrangement according to the invention, the sleeve may be in the form of a heat conductive metallic member defining an annular contact surface and adapted to be clamped in heat transferring contact about the exterior surface of the die, the member being provided with a plurality of cooling zones each including at least one receiving formation, the receiving formations being located about the contact surface and spaced from the contact surface and each receiving formation being adapted in use to serve as a conduit in use to cool its associated cooling zone of the member and thereby to cool the zone of the die in the vicinity of that cooling zone upon a coolant being passed therethrough.

In another form of this arrangement according to the invention, there is provided a die having a die wall defining the bore into which the mandrel is received in spaced relationship when in use, the die wall defining a plurality of cooling zones each including at least one receiving formation, the receiving formations being spaced from and about the bore and each being adapted in use to serve as a conduit for a coolant in use to cool a die zone in its vicinity upon being supplied with a coolant passing therethrough.

The receiving formations defining the conduits may be in the form of passages which extend parallel to the axis of the bore of the die.

The receiving formations are preferably spaced symmetrically about the bore of the die.

The passages preferably include valve means adapted in use to control the flow of the coolant therethrough.

In a third alternative arrangement according to the invention the cooling passages each being adapted also to receive a heating element, each passage being formed such as to allow a coolant to flow through the passage and about a heating element which is disposed in heat conductive contact with the wall of the passage.

Thus the passage may have a side wall in which a helical by-pass is provided.

Preferably the arrangement may be adapted to receive compressed air as a coolant.

In the preferred form of the invention the extrusion arrangement comprises a primary heating arrangement and a heat differential means including both a booster heating arrangement and a cooling arrangement.

Further according to the invention there is provided a method of extruding a tube-shaped member including the steps of extruding a thermoplastic polymeric material through an extruder arrangement as set out above, monitoring the extrusion at predetermined intervals for uniformity of wall thickness and, if necessary, adjusting the temperature differential between one or more segmental zones of the die to improve unacceptable disuniformity in the monitored wall thickness by activating the heat differential means.

In a preferred form of the invention the wall thickness of the pipe may be monitored by means of sonar wall thickness measuring equipment.

Further according to the invention the sonar measuring system includes a transducer/receiver mounted on a suitable circular frame through which the extruded pipe is taken off and the transducer/receiver is arranged to move about the pipe circumference to take a plurality of measurements about the circumference of the pipe, the system being controlled by a control system including a microprocessor arranged to compare the measurements taken with a set standard and allowable tolerances and to activate the heat differential means associated with the extruder arrangement in the event of detecting wall zones of a thickness falling outside of the set tolerances, said control system being arranged to adjust the temperature in the zone of the die through which the errant pipe zone was extruded to bring it to within the set tolerances.

Preferably the control system of the measuring system is programmed to take a number of measurements about the circumference equal to the number of heating or cooling segments present in the temperature differential means.

In an alternative form of the invention the wall thickness measuring equipment may include a plurality of ultrasonic transducer/receiver heads mounted in circular fashion about the take-off path of an extruded element, the number of heads being equal to the number of heating or cooling zones of the temperature differential means associated with the die from which the extruded article emerges, and the arrangement being such that each head is arranged to monitor the thickness of a wall section emerging from a particular segment of the extrusion passage disposed immediately adjacent a particular heating or cooling zone of the temperature differential means.

Thus there may be provided eight stationary ultrasonic measuring heads.

The heads are preferably disposed in a water jacket to ensure a film of water between the head and the pipe wall to be monitored.

Without thereby limiting the scope of the invention some examples of an extruder arrangement according to the invention will now be described with reference to the accompanying drawings in which:

Figure 1a is a side view of a first embodiment of an extruder head according to the invention;

Figure 1b is an end view of the extruder head of Figure 1a;

Figure 2a is a section through a second embodiment of an extruder head according to the invention;

Figure 2b is an end view of the head of Figure 2a;

Figure 3a is a section through a third embodiment of an extruder head according to the invention;

Figure 3b is an end view of the extruder head of Figure 3a;

Figure 4a is a section through a fourth embodiment of an extruder head according to the invention;

Figure 4b is an end view of the extruder head of Figure 4a;

Figure 5 is a schematic perspective view of an extruder arrangement according to the invention when operating according to the method of the invention; and

Figure 6 is a schematic perspective view of an alternative extruder arrangement according to the invention when operating according to the method of the invention.

In the accompanying drawings the same reference numerals are used to indicate the elements which are common to all the arrangements. Such common elements are shown to comprise the die wall 2 defining a bore 3 the surface of which constitutes the forming surface of the die. A mandrel 4 is disposed in the die and the surface of the mandrel constitutes the interior forming surface for a pipe-shaped extrusion. An extrusion passage 5 is accordingly defined between the surface 3 of the die and the surface of the mandrel 4. A standard annular heating jacket 6 forms part of some of the embodiments of the invention which will be described in greater detail below.

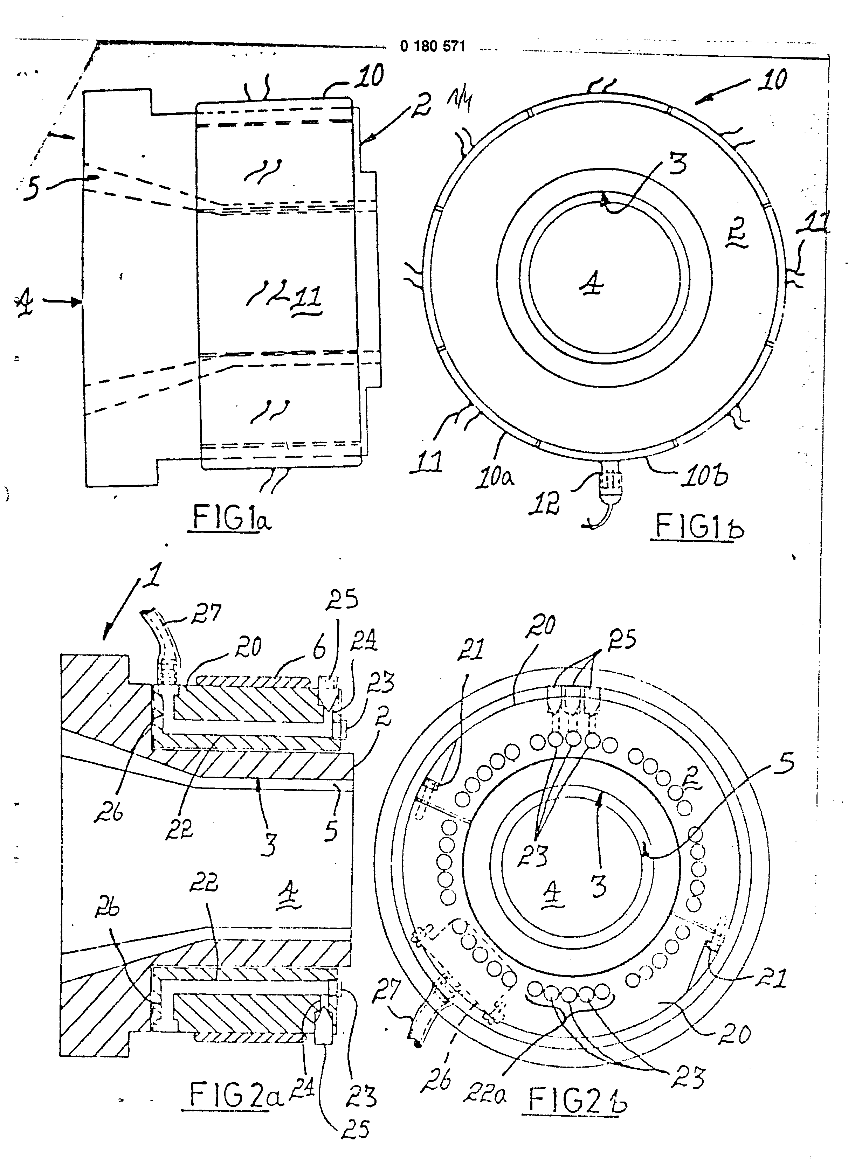

Referring now to Figures 1a and 1b of the accompanying drawings it will be understood by those skilled in the art that the extruder head illustrated in these figures is similar to the extruder head presently being used in the extrusion of plastic pipes from thermoplastic polymeric materials such as unplasticised polyvinylchloride. The improvement of the present invention comprises the location of a segmented heating element 10 on the die 1. As can best be seen in Figure 1b, the heating element 10 comprises discrete heating segments, two of which are indicated at 10a and 10b. Each segment is provided with its own electricity supply wires as illustrated at 11 and these wires may be connectable to a mains supply by means of a plug arrangement of the nature shown at 12. By individually controlling the energy supply to the segments of the heating element the temperature to which the various circumferential zones of the die will be heated may be individually controlled. It should be understood that the term zone as used in this specification refers to an undermarcated part of the die or heating ring and not a clearly defined part delimited by sharp borders.

Referring now to the embodiments of the invention shown in Figures 2a and 2b of the accompanying drawings, the die 1 is shown to be provided with an annular sleeve member 20 which is formed in two halves secured together by means of screws as shown at 21. The sleeve may be of any suitable material such as, for example, aluminium. When fitted on the die the sleeve 20 is provided with an annular heating element 6 which is connected in a suitable manner [not shown] to a mains supply. The heating element 6 may be of the same nature as those conventionally used at present on extruder dies of the type in question. The sleeve 20 is further provided with forty passages 22 which extend, when the sleeve is in operative condition on the die, parallel to the axis of the bore 3 of the die 1. These passages are grouped together in eight groups of five each as is shown at 22a in Figure 2b. The passages are blocked off at their outer ends by means of plugs indicated at 23. Each of the passages 22 is provided with an outlet orifice 24 which is in turn blocked off by means of an adjustable needle type valve 25. It should be understood that the valves 25 are not essential in all circumstances and that uniformity of coolant flow through the passages 22 of a particular group may be achieved in various other manners.

It will be seen that the valves 25 may be operable by means of an allan key to adjust the spacing between the tapered portion thereof and a seat provided therefor in the outlet passage. At the opposite ends of the passages 22 there is provided an inlet manifold arrangement 26 which is in turn connected to a feed pipe 27 associated with each of the inlet manifolds 26. In use the feed pipe 27 is connected to a supply of compressed air via a suitable control valve which is preferably electrically separated.

It will be appreciated that the drawings of Figures 1 to 4 are of a schematic nature and that for the sake of clarity of the drawings all the details are not shown. Thus in Figure 2b only one group of passages 22a is shown to be provided with a manifold arrangement 26 and that only three of the passages 22 are shown to be fitted with a needle-type valve 25. It will be understood that all of the passages include such valves 25 and that each group of passages 22a is in fluid connection with a manifold arrangement 26.

In use the valves 25 will be adjusted to allow a greater air flow through the central passage of each group and progressively less air flow through the flanking passages. Such adjustment will be made at the start of the production run and it is not anticipated that the valves will require adjustment during the production run.

With this form of the invention the various zones of the die 1 disposed adjacent the various groups of passages 22a may selectively be cooled by passing a suitable coolant, for example, compressed air through the passages. In this manner a heat differential between two zones of the die may be achieved. It will be understood that suitable calibration will be effected beforehand so that during the production run it is possible to effect a required temperature reduction in a zone of the die by passing air at a predetermined temperature and predetermined pressure through the passages of the zone required to be cooled for a predetermined calibrated time interval.

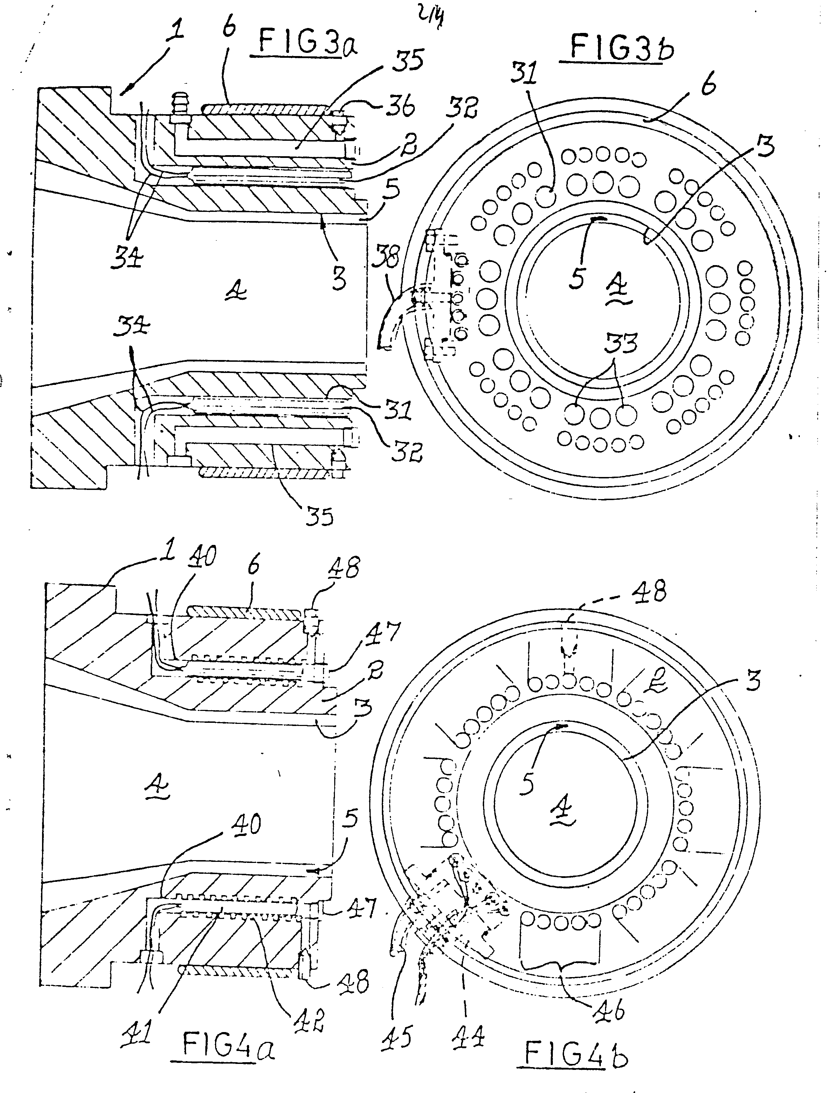

Referring now to Figures 3a and 3b of the accompanying drawings, there is shown a die arrangement 1 provided with a mandrel 4 and with an annular heating element 6 extending about the outer wall of the die arrangement to which heating element is designed to heat the die to a uniform temperature along its circumference. The die is further provided with a temperature differential means in the form of a combination of a booster heating and cooling arrangement. The booster heating arrangement comprises twenty-four receiving formations 31 in the form of passages in each of which passages there is fitted a cartridge-type heating element 32. The receiving formations 31 are grouped together in eight groups of three each as is indicated at 33. Each heating cartridge 32 is provided with electrical leads 34 which in use are connected to an electricity mains supply via a suitable control mechanism.

The die wall is further provided with a second range of passages 35 which are of the nature and arrangement as described with reference to the passages 22 in Figures 2a and 2b. Again the passages 35 are provided with outlet valves 36 and each group 33 is provided with an inlet manifold arrangement 37 connected to a coolant supply tube 38.

Referring now to the arrangement shown in Figures 4a and 4b of the accompanying drawings, the die arrangement is provided with passages 40 extending parallel to the axis of the bore of the die but it should be noted that the passages are provided with an internal helical groove formation 42 which would in use allow air fed into the passage 40 to flow through the passage in the helical groove 42 about the cartridge heating element 41 fitted in the passage 40. For the rest of the passage is similar to the passages disclosed above with reference to Figures 2a, 2b and 3a, 3b. The manifold arrangement 44 in this embodiment also serves the function of a collecting chamber for the electricity leads of the cartridge heating elements in addition to being a manifold for distributing air fed through the air supply tube 45 to the various passages of a group of passages indicated at 46. Again the passages 40 are provided with plugs 47 and with valves 48. The electricity leads of the cartridges disposed in a group of passages are collected at the manifold 44 into a cable 49.

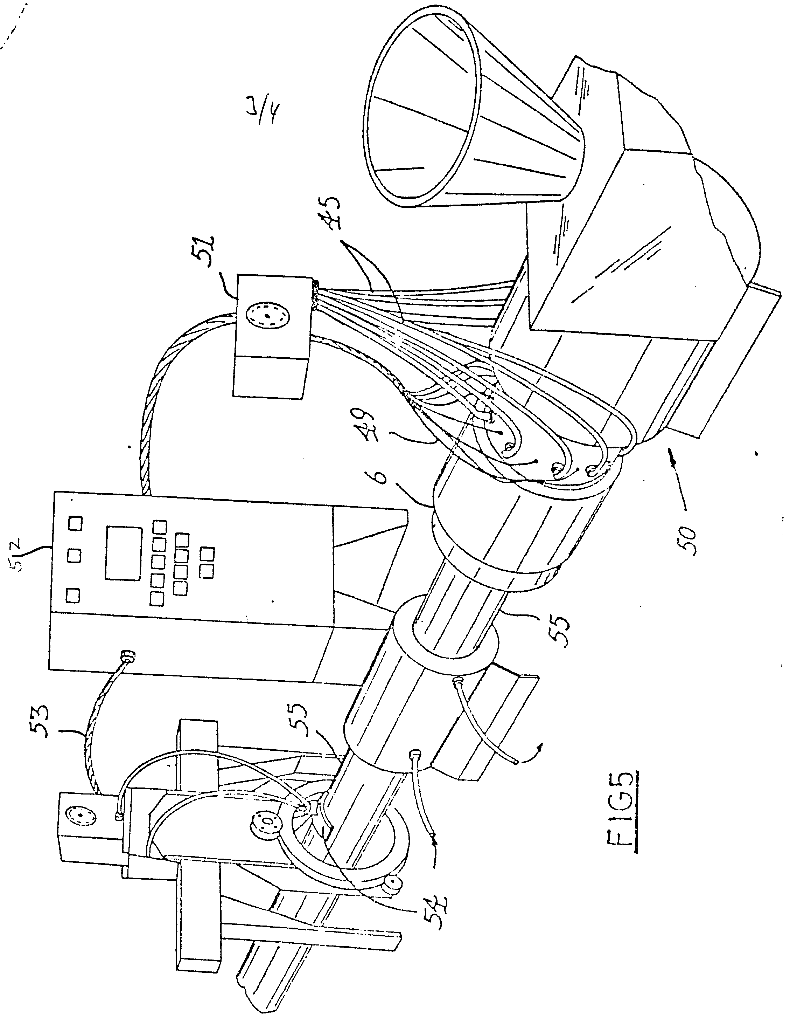

Referring now to Figure 5 of the accompanying drawings there is shown an extrusion machine 50 fitted with an extruder head comprises a die arrangement of the type shown in Figures 4a and 4b of the accompanying drawings. The die is fitted with basic heating element 6 and the air supply tubes 45 and the cables 49 supplying the cartridge heating elements 41 are also visible.

The cables 49 and supply tubes 45 are connected a supply unit 51 which in turn is operatively connected to an electrical mains supply and compressed air supply [not shown].

The supply unit 51 is associated with a computerised control unit 52 which houses a micro-processor and signal converter arrangement of any suitable type which is adapted to perform the function set out below.

The control unit 52 is connected via cable 53 to an ultrasonic wall thickness transducer/receiver scanning head 53 mounted on a circular track arrangement 54 which allows the head 53 to scan about the circumference of the pipe 55 extruded from the extruder 50.

The control unit 52 is programmed with such detail as the allowable minimum and maximum wall thickness of the pipe 55 to be extruded and to compare measurements obtained by the scanning head 54 with such recorded values. The control unit 52 is further programmed upon receiving a non-conforming signal from the scanning head to activate the supply unit thereby to take corrective measures.

Such corrective measures may comprise either energising the cartridge type heating elements 41 disposed in an undersized extrusion zone to thereby decrease the viscosity of the material passing through the die in that zone or by cooling a zone which is oversized thereby making the material less fluid.

In this manner accurate wall thickness control may be achieved without the necessity of physically altering the configuration of the extrusion passage by moving the die relative to the mandrel by means of an hydraulic system as is presently done.

The control unit and scanner head may be of the type presently marketed by BUHL of Denmark under the trade designation IMP 3000.

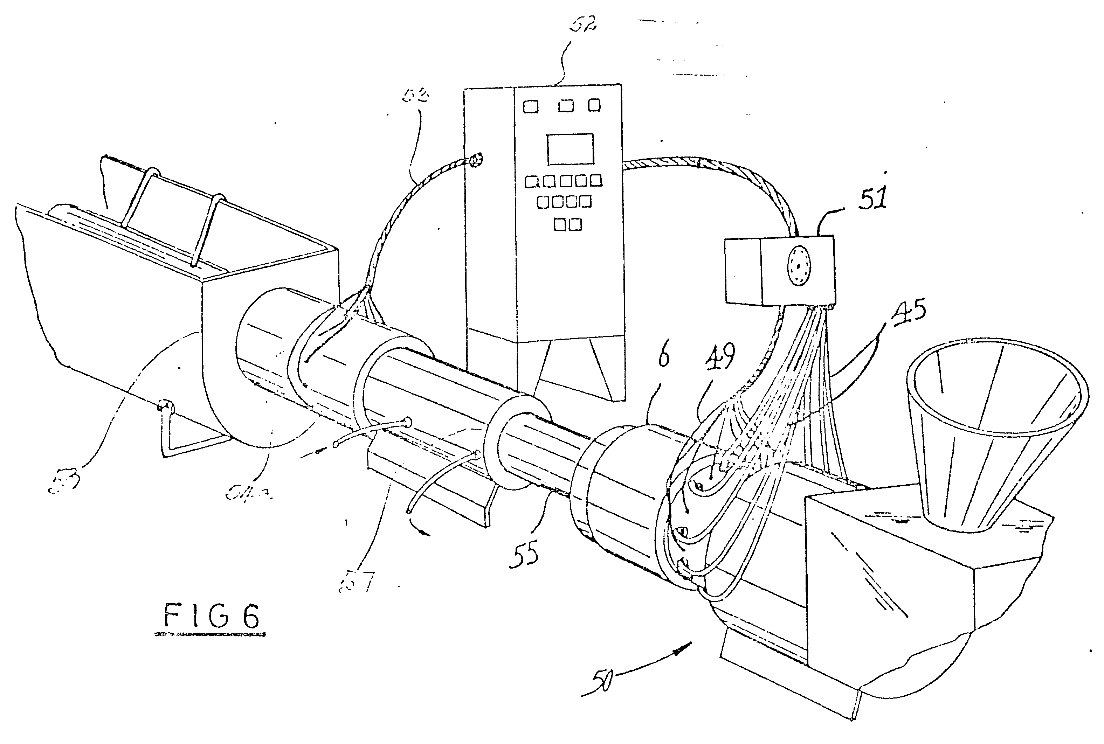

Referring now to Figure 6 there is shown an arrangement similar to the arrangement shown in Figure 5 but without a moving scanning head 54. In the arrangement of Figure 6 there is provided a collection of eight ultrasonic detection heads [not shown] located in circular fashion inside a water jacket arrangement 56. The jacket 56 is sealingly connected by means of suitable seals to the callibrator 57 at its one end and to a cooling bath 58 at its other end. The jacket is in use filled with water via an inlet [not shown].

Each detector head disposed in the jacket 56 is connected via lead wires 54(a) [which are joined together into cable 53] to the control unit 52.

Again, the measurements taken by the heads are processed by the control unit 52 and this unit in turn energises the supply unit 51 to effect corrective measures at the die as described above.

Many variations of the invention are possible without thereby departing from the spirit of the invention.

## Claims

1. An extruder arrangement comprising [a] an annular die having a bore which constitutes a forming surface, [b] a mandrel disposed in the die and presenting a forming surface facing the forming surface at the die and spaced therefrom such that an extrusion passage is defined between the two forming surfaces, and [c] a heating arrangement in heat conductive relationship with one of the forming surfaces, characterised in that it includes temperature differential means in heat conductive relationship with at least one of the forming surfaces, which temperature differential means is adapted in use to allow the temperature of selected circumferential zones of an extrusion piece disposed in the extrusion passage to be individually controlled.

2. The extruder arrangement of claim 1 wherein the temperature differential means is in heat conductive relationship with the forming surface of the mandrel.

3. The extruder arrangement of claim 1 wherein the temperature differential means is in heat conductive relationship with the forming surface of the die.

4. The extruder arrangement of claim 3 wherein the temperature differential means includes an annular heating sleeve which is adapted in use to be received in heat conductive relationship about the annular die and which includes a plurality of heating segments at least some of which segments are adapted to be individually energised to be heated to different temperatures, thereby to allow a heat differential to be created between the die zones in heat contact with the individually controllable heating segments.

5. The extruder arrangement of claim 4 wherein the annular heating sleeve comprises eight heating segments in side by side relationship collectively to define a continuous sleeve, each heating segment being adapted to be individually energised.

6. The extruder arrangement of claim 4 wherein the sleeve is in the form of a heat conductive metallic member defining an annular contact surface and adapted to be clamped in heat transferring contact about the exterior surface of the die, the member being provided with a plurality of heating zones each including at least one receiving formation, the receiving formations being located about the contact surface and spaced from the contact surface and each containing a heating element arranged in use to impart heat to its associated heating zone of the member and thereby to heat the zone of the die in the vicinity of that heating zone upon being energised.

7. The extruder arrangement of claim 3 wherein there is provided a die having a die wall defining the bore into which the mandrel is received in spaced relationship when in use, the die wall defining a plurality of heating zones each including at least one receiving formation, the receiving formations being spaced from and about the bore and each containing a heating element arranged in use to heat a die zone in its vicinity upon being energised.

8. The extruder arrangement of claim 6 and claim 7 wherein the receiving formations containing the heating elements are in the form of passages which extend parallel to the axis of the bore of the die.

9. The extruder arrangement of claim 8 wherein the receiving formations are spaced symmetrically about the bore of the die.

10. The extruder arrangement of any one of claims 6 to 9 wherein the heating elements are in the form of heating cartridges received snugly in the receiving formations.

11. The extruder arrangement of any one of claims 6 to 9 wherein each heating zone includes a plurality of receiving formations.

12. The extruder arrangement of any one of claims 3 to 11 wherein the heating elements forming part of the temperature differential means is the sole source of heat for heating the die.

13. The extruder arrangement of any one of claims 3 to 11 wherein the temperature differential means is used in conjunction with an additional die heating arrangement which is designed to heat the die to a uniform temperature along its entire circumference and wherein the temperature differential means primarily serve a temperature boosting function.

14. The extruder arrangement of claim 3 wherein the temperature differential means includes a cooling system arranged to cool selected zones of the die.

15. The extruder arrangement of claim 14 wherein the temperature differential means includes an annular cooling sleeve which is adapted in use to be received in heat conductive relationship about the annular die and which includes a plurality of cooling segments at least some of which segments are adapted to be individually supplied with a coolant thereby to allow a heat differential to be created between the die zones in heat contact with the individually controllable cooling segments.

16. The extruder arrangement of claim 15 wherein there is provided an annular cooling sleeve comprising eight cooling segments in side by side relationship collectively to define a continuous sleeve, each segment including a conduit and the arrangement being such that each conduit is adapted to be individually supplied with a coolant passing therethrough.

17. The extruder arrangement of claim 15 wherein the sleeve is in the form of a heat conductive metallic member defining an annular contact surface and adapted to be clamped in heat transferring contact about the exterior surface of the die, the member being provided with a plurality of cooling zones each including at least one receiving formation, the receiving formations being located about the contact surface and spaced from the contact surface and each receiving formation being adapted in use to serve as a conduit to receive a coolant therethrough to cool its associated cooling zone of the member and thereby in use to cool the zone of the die in the vicinity of that cooling zone upon a coolant being passed therethrough.

18. The extruder arrangement of claim 15 wherein there is provided a die having a die wall defining the bore into which the mandrel is received in spaced relationship when in use, the die wall defining a plurality of cooling zones each including at least one receiving formation, the receiving formations being spaced from and about the bore and each being adapted in use to serve as a conduit for a coolant in use to cool a die zone in its vicinity upon being supplied with a coolant passing therethrough.

19. The extruder arrangement of claim 17 or 18 wherein the receiving formations defining the conduits are in the form of passages which extend parallel to the axis of the bore of the die.

20. The extruder arrangement of claim 19 wherein the receiving formations are spaced symmetrically about the bore of the die.

21. The extruder arrangement of claim 20 wherein the receiving formations include valve means adapted in use to control the flow of the coolant therethrough.

22. The extruder arrangement of any one of claims 15 to 21 wherein at least some of the coolant receiving passages are adapted also to receive a heating element, each passage being formed such as to allow a coolant to flow through the passage and about a heating element which is disposed in heat conductive contact with the wall of the passage.

23. The extruder arrangement of claim 22 wherein the passages have side walls in which helical by-passes are provided.

24. The extruder arrangement of any one of claims 15 to 23 which is adapted to receive compressed air as a coolant.

25. The extruder arrangement of claim 1 including a primary heating arrangement and a heat differential means including both a booster heating arrangement and a cooling arrangement as claimed in any one of claims 3 to 24.

26. A method of forming a tube-shaped member including the steps of extruding a thermoplastic polymeric material through an extruder arrangement as claimed in any one of claims 1 to 25, monitoring the extrusion at predetermined intervals for uniformity of wall thickness and, if necessary, adjusting the temperature differential between one or more segmental zones of the die to improve unacceptable disuniformity in the monitored wall thickness by activating the heat differential means.

27. The method of claim 26 in which the wall thickness of the pipe is monitored by means of sonar wall thickness measuring equipment.

28. The method of claim 27 in which the sonar measuring system includes a transducer/receiver mounted on a suitable circular frame through which the extruded tube-shaped member is taken off and the transducer/receiver is arranged to move about the pipe circumference and to take a plurality of measurements about the circumference of the pipe, the system being controlled by a control system including a microprocessor arranged to compare the measurements taken with a set standard and allowable tolerances and to activate the heat differential means associated with the extruder arrangement in the event of detecting wall zones of a thickness falling outside of the set tolerances, said control system being arranged to adjust the temperature in the zone of the die through which the errant pipe zone was extruded to bring it to within the set tolerances.

27. The method of claim 28 in which the control system of the measuring system is programmed to take a number of measurements about the circumference equal to the number of heating or cooling segments present in the temperature differential means.

30. The method of claim 27 in which the wall thickness measuring equipment includes a plurality of ultrasonic transducer/receiver heads mounted in circular fashion about the take-off path of an extruded element, the number of heads being equal to the number of heating or cooling zones of the temperature differential means associated with the die from which the extruded article emerges, and the arrangement being such that each head is arranged to monitor the thickness of a wall section emerging from a particular segment of the extrusion passage disposed immediately adjacent a particular heating or cooling zone of the temperature differential means.

31. The method of claim 30 in which the heads are disposed in a water jacket to ensure a film of water between the head and the pipe wall to be monitored.

32. An extruder arrangement substantially as herein described with reference to the accompanying Figures 1a and 1b.

33. An extruder arrangement substantially as herein described with reference to the accompanying Figures 2a and 2b.

34. An extruder arrangement substantially as herein described with reference to the accompanying Figures 3a and 3b.

35. An extruder arrangement substantially as herein described with reference to the accompanying Figures 4a and 4b.

36. A method of extruding a tube shaped member substantially as herein described with reference to the accompanying Figure 5.

37. A method of extruding a tube shaped member substantially as herein described with reference to the accompanying Figure 6.

0 180 571

FIG1a

FIG1b

FIG2a

FIG2b

## FIG3a

## FIG3b

## FIG4a

## FIG4b

FIG5

FIG 6

0 180 571